# EUROPÄISCHE PATENTSCHRIFT

(11) **EP 0 473 051 B1**
(45) Veröffentlichungstag und Bekanntmachung des Hinweises auf die Patenterteilung: **21.04.1993**
(21) Anmeldenummer: 91113980.6
(22) Anmeldetag: 21.08.1991
(51) Int. Cl.: A01K 1/01

(54) **Selbstfahrendes Dungräumgerät für landwirtschaftliche Tierlaufställe**
Self-propelled pit cleaner for agricultural stable
Evacuateur automoteur de fumier dans des étables agricoles

(30) Priorität: 28.08.1990 DE 4027125
(43) Veröffentlichungstag der Anmeldung: 04.03.1992
(73) Patentinhaber: Irps, Hartwig, Dr.-Ing., D-38159 Vechelde (DE)
(72) Erfinder: Irps, Hartwig, Dr.-Ing., D-38159 Vechelde (DE)

(56) Entgegenhaltungen:
- BE-A- 640 951
- DE-A- 2 015 627
- DE-A- 2 541 877
- DE-A- 3 018 723
- DE-B- 1 109 441
- DE-B- 1 183 301
- DE-C- 919 443

## Beschreibung

Die Erfindung betrifft einen landwirtschaftlichen Tierlaufstall mit freilaufenden Tieren und einem selbstfahrenden Dungräumgerät mit Elektroantrieb (d) nach dem Oberbegriff des Patentanspruches 1 mit der folgenden Auswirkung:
Das selbstfahrende Dungräumgerät kann halbautomatisch mit Handschalter oder vollautomatisch mit Zeitschalter - beide Schalter sind vorzugsweise außerhalb des Tierbereiches anzubringen - in Tierlaufställen fahren, um den auf dem Stallboden (h) liegenden Dung (Gemisch aus Kot, Harn und Einstreumaterial) aus dem Stall zwecks weiterer Entsorgung zu entfernen. Dazu können entsprechend angepaßte Tierabtrennungen (n) je nach Ausführungsart des Dungräumgerätes durchfahren oder bei Betrieb ohne Elektro-Schleppkabel unterfahren werden. Die vorhandenen Schiebeschilde des selbstfahrenden Dungräumgerätes sollen oberflächenschonend den Stallboden (h) säubern. Aus diesem Grunde können die Schiebeschilde (f,g) an dem Fahrrahmen (a) befestigt werden. Der Bodenkontakt kann dann mit weicheren Materialien (z.B. Holz, Gummi, Bürsten) als die der Stallbodenoberfläche (z.B. Beton) ausgeführt werden. Hiermit soll die Rutschfestigkeit der Stallbodenoberfläche für die Sicherheit von Mensch und Tier möglichst lange erhalten bleiben. Außerdem kann durch die Anordnung von mehr als einem Schiebeschild erreicht werden,daß auch beim Rücklauf des selbstfahrenden Dungräumgerätes in der Zwischenzeit neu angefallener Dung entfernt wird.

### Zum Stand der Technik:

Dungschieber auf geschlossenen oder perforierten Böden im Aufenthaltsbereich landwirtschaftlicher Nutztiere gehören seit Jahrzehnten zum Standardverfahren der Dungräumung aus Stallanlagen. Diese Dungschieber bestehen in der Regel aus einem Schiebeschild, welches auf dem Boden aufliegt und über ein mittig oder an den beiden Seiten angebrachtes Seil oder eine Kette von einer außerhalb des Tierbereiches aufgestellten Antriebseinheit oder über Schrittschiebergestänge durch den mit Dung verschmutzten Aufenthaltsbereich der Tiere befördert wird. Bezüglich der Konstruktionsart sind die Anforderungen in traditionellen Anbindeställen unterschiedlich zu den Anforderungen in modernen Laufställen. So werden im Rinder-Liegeboxenlaufstall Schiebeschilde in Klapp- oder Rollschieberausführung (so bezeichnet, damit beim Rücklauf kein Dung befördert wird) in Kombination mit seitlichen Führungskanten entweder durch die Seil- oder Kettenspannung auf Position gehalten oder sie werden mit im Stallboden angebrachten Führungsrinnen geführt.

Die durch die DE-A- 3018723 und die DE-A- 2541877 bekannten, manuell oder motorisch (Elektromotor; Verbrennungsmotor) verschiebbaren oder verfahrbaren Fahrgestelle sind entweder mit Schiebeschilden, mit Lockerungswalzen und Absaugstutzen (auch in Kombination mit Auffangbehälter) oder mit Vorrichtungen zur Ankopplung an eine Seilwinde am unteren Ende einer Stapelrampe der Dungstätte ausgestattet. Diese Geräte erfordern die Führung durch das Stallpersonal und können in bauseits nicht eindeutig festgelegten Fahrbahnen z.B. zum Entmisten von relativ trockenem Dung in Pferdeställen (Gerät mit Lockerungswalzen und Absaugstutzen) zum Entmisten von Anbindeställen oder zum vielseitigen Einsatz (Gerät mit Kettenantrieb und Steuerungsmöglichkeit der einzelnen Kettengeschwindigkeit) bei Aufsatz eines Behälters für den Transport von Versorgungsmaterial (Futter) bzw. Entsorgungsmaterial (Dung) eingesetzt werden. Entsprechende Gerätekombinationen eignen sich nicht zum selbsttätigen und unbeaufsichtigten Durchlauf durch den Tierbereich bei Verbleiben der Tiere auf der zu reinigenden Fläche. Sie stellen für die Tiere ein Hindernis dar, sind technisch aufwendig konstruiert und erfordern hohe Anschaffungskosten. Technische Vorrichtungen zur Reinigung der Kotrinnen bzw. Kotrosten im Anbindestall, wie sie beispielsweise die DE-A- 2015627 und die DE-C- 919443 belegen, scheiden wegen der Bauhöhen, der Handführung, der erforderlichen Beaufsichtigung durch das Stallpersonal und der mangelhaften Standfestigkeit für den Einsatz in den heutigen Rinder-Liegeboxenlaufställen aus, da die Rinder während des Durchfahrens durch den Tierbereich auf der Lauffläche verbleiben und Rangauseinandersetzungen im Bereich des Dungräumgerätes nicht zu vermeiden sind. Selbsttätige Dungräumgeräte in Laufställen dürfen kein sperrendes Hindernis darstellen. Die gegenüber dem Rinder-Anbindestall verschmutzten Flächen sind im Liegeboxenlaufstall etwa bis siebenmal breiter. Nach dem Dokument DE-B-1183301 ist ein Dungschieber für die Kotrinnenreinigung gemäß dem Oberbegriff des Anspruchs 1 bekannt. Statt des Kotrinnenbodens sollen die vertikalen Seitenfläche der Dungrinne mit den motorisch angetriebenen horizontalen Antriebsrädern als Reibflächen für den Kraftschluß wirken. Obwohl im beschreibenden Text der DE-B-1183301 das Tierhaltungssystem nicht gesondert erwähnt wird, ist auch hier von einem beaufsichtigten Einsatz in von Tieren freien Dungrinnen geringer Breite auszugehen. Durch die Art des Antriebes soll mit zunehmenden Dungvolumen ein erhöhter Andruck der Antriebsräder an die Dungrinnen-Seitenflächen erreicht werden. Breite der Dungschaufel, Durchmesser der Antriebsräder, Antriebsmotor und Höle der Dungrinnenkanten sind auf Dungrinnen zugeschnitten, wie sie in den traditionellen Stallsystemen mit angrezenden Tierbereichen (z.B. Anbindestall) vorzufinden sind.
Eine weiter übliche Art der Dungräumung im Tierlaufstall ist das Überfahren der Tierlaufgänge mit einem Traktor. Vor oder hinter dem Traktor befindet sich ein Schiebeschild, welches über die Hydraulik zum Räumen des Dunges in Fahrtrichtung auf den Stallboden aufgesetzt wird. Kleintraktoren mit Batterie- oder Verbrennungsmotor werden in Stallanlagen mit geringer Bauhöhe eingesetzt.

Von Hand geführte Einachsantriebe mit Verbrennungsmotor und angebautem Schiebeschild werden auch heute noch für kleine landwirtschaftliche Betriebe zwecks Reinigung - u.a. auch der Laufgänge in Rinder-Liegeboxenställen - angeboten. Tierlaufställe sind Stallanlagen, in denen die landwirtschaftlichen Nutztiere nicht angebunden sind.

### Kritische Beurteilung der vorhandenen Anlagen:

Nachteil der gezogenen Schieberanlagen im Tierlaufstall ist der hohe Wartungsaufwand und damit verbunden die mangelhafte Betriebssicherheit. Seile, Ketten, Umlenkrollen, metallische Führungsschienen, Gestänge und Schiebeschild unterliegen einem kostenintensiven Verschleiß, was auch ein Grund für die Umstellung von Festmist auf Flüssigmist ist. Als weiterer Nachteil ergibt sich der nicht gewichtsentlastende Bodenkontakt der verschiedenen - in der Regel metallischen - Schiebeschilde.
Nachteil des Traktoreinsatzes zum Dungräumen in Tierlaufställen ist, daß die Tiere nicht während des Einsatzes auf der Dungbahn verbleiben können. Beim Einsatz von Geräten mit Verbrennungsmotoren ergeben sich unerwünschte Lärm- und Schadgasquellen im landwirtschaftlichen Gebäude.

### Aufgabe der Erfindung:

Der Erfindung liegt die Aufgabe zugrunde, ein selbstfahrendes Dungräumgerät mit Elektroantrieb zu konstruieren, welches auf einer vorgegebenen Fahrbahn den Tierlaufgang überfahren und durch passive (Schiebeschilde) oder aktive (z.B. Bürsten, Sprüheinrichtungen) Reinigungselemente den Stallboden bodenschoned reinigen kann. Dabei sollen entsprechend angepaßte Tierabtrennungen unter- bzw. durchfahren werden. Im halbautomatischen Betrieb soll der elektrische Handschalter von außerhalb des Tierbereiches betätigt werden. Der vollautomatische Betrieb soll über eine Zeitschaltuhr realisiert werden. Entsprechende End- und Wendeschalter sollen die Ruhestellung herbeiführen. Die Anforderungen des Landwirts nach möglichst einfacher Konstruktion des Dungräumgerätes sind zu erfüllen.

### Lösung durch die Erfindung:

Diese Aufgabe ist gemäß dem kennzeichnenden Teil des Patentanspruches 1 gelöst. Die Stromzuführung (l) zum Elektromotor (d) geschieht im einfachsten Fall über ein Elektrokabel, welches von außerhalb des Tierbereiches über einen mechanischen Kabel- und Motorschutz im Tierbereich zu den Anschlußklemmen des Elektroantriebes des selbstfahrenden Dungräumgerätes geführt wird. Stromzuführungen mit Hilfe von geschützten Stromschienen oder bei Vorhandensein eines Akkumulators auf dem Dungräumgerät über Ladestationen in den Endstellungen der Fahrbahn sind möglich. Die elektrische Beschaltung erfolgt nach Wunsch des Landwirts in Hand- oder Automatikbetrieb. Die Kraftübertragung auf die Antriebsachse (e) wird in der Regel mittels Kette und Zahnrad oder mit Keilriemen und Keilriemenscheiben realisiert, wenn der Antrieb (d) keine eigenen Räder mit Bodenkontakt als Antriebsräder besitzt. Bei zusätzlich benötigten Antriebsrädern (b) des Fahrrahmens (a) ist die Kraftkopplung z.B. mittels zerlegbarer Kette und Zahnrad möglich. Statt einer mit Fahrbahnrädern versehenen Antriebsachse ist auch der Antrieb des selbstfahrenden Dungräumgerätes mit Seiltrommel oder Kettenrad - befestigt am Fahrrahmen - und verlegtem Seil bzw. Kette auf dem Stallboden oder in Vertiefungen des Stallbodens oder auch in Kombination mit Zahnrad und Zahnradgestänge denkbar. Die Bauhöhe des Fahrgestells sollte zehn bis zwanzig Zentimeter nicht übersteigen. Extrem flache Schiebeschilde zum ungestörten Übersteigen durch die Tiere sind möglich, da bei mehr als einem Schiebeschild bei größerem Dungvolumen durch die nachfolgenden Schiebeschilde eine Aufteilung des Dungvolumens je Schild möglich ist. Die Fahrgeschwindigkeit im Tierbereich sollte drei Meter in der Minute nicht übersteigen. Dann ist gewährleistet, daß die Tiere in Ruhe über den Fahrrahmen (a) des Dungräumgerätes hinwegsteigen können. Der Elektroantrieb ist in Kompaktbauweise (z.B. Elektromotor mit Stirnradgetriebe) einzusetzen.
Das selbstfahrende Dungräumgerät für landwirtschaftliche Tierlaufställe soll die Betriebssicherheit im Vergleich zu vorhandenen Entsorgungsanlagen fördern und stroharme bzw. strohlose Haltungsverfahren mit Festmisterzeugung ermöglichen, wenn bauseits der dazu notwendige Jaucheabfluß realisiert wird (z.B. Fahrbahn mit Gefälle versehen).

Besondere Ausführungsarten sind in den abhängigen Ansprüchen angegeben.

### Zeichnungen:

Zwei Zeichnungen veranschaulichen ein mögliches Ausführungsbeispiel für Rinder-Liegeboxenlaufställe.

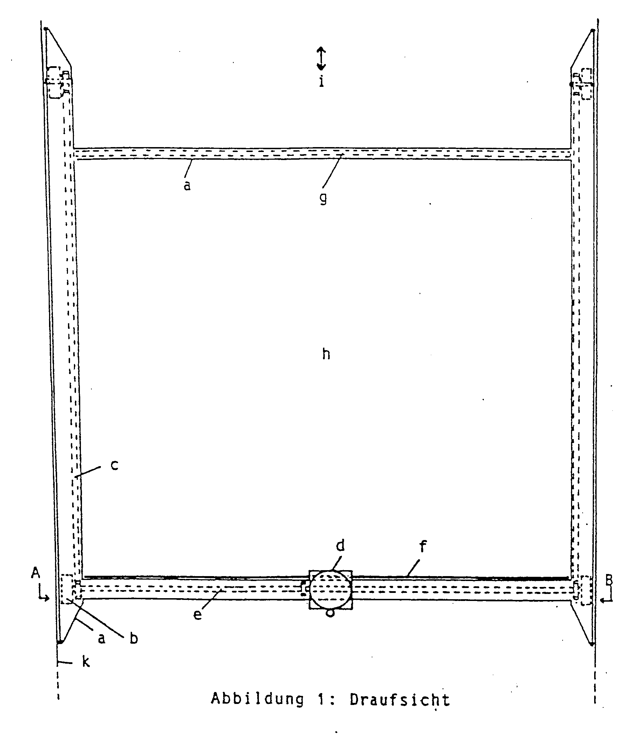

Abbildung 1 = Draufsicht

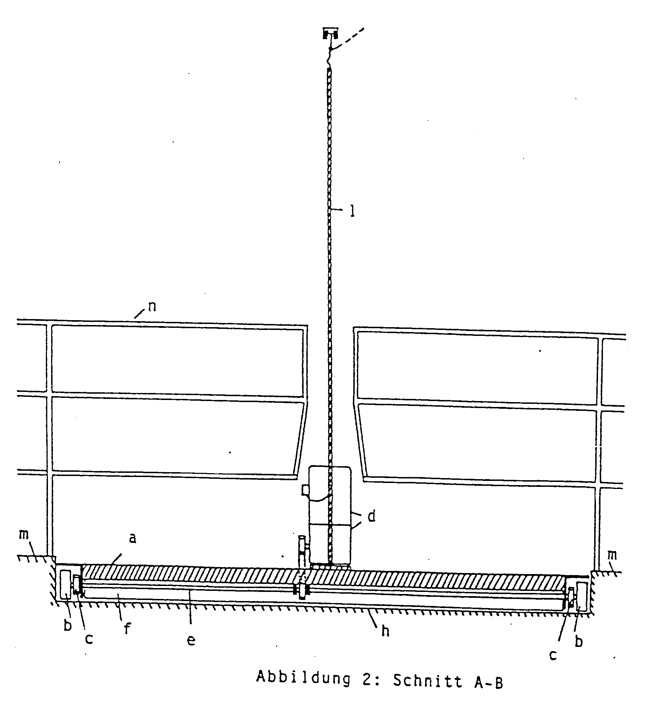

Abbildung 2 = Schnitt A-B der Draufsicht

### Die Bezeichnungen bedeuten:

- a =: Fahrrahmen des selbstfahrenden Dungräumgerätes
- b =: Fahrbahnräder
- c =: Zusätzlicher Antrieb weiterer Fahrbahnräder; hier mit Zahnrad und zerlegbarer Kette
- d =: Elektroantrieb, bestehend aus Elektromotor und Untersetzungsgetriebe. Mittige oder seitliche Anbringung entsprechend der Fahrbahn im Rinder-Liegeboxenlaufstall
- e =: Vom Elektroantrieb angetriebene Achse
- f =: Bewegliches(drehbares) Schiebeschild in Transportstellung. Empfohlene Anbringung des Schiebeschildes auf der Höhe der Antriebsachse derart, daß keine Gewichtsentlastung möglich ist (z.B. Zugeisen vom seitlichen Rahmen).
- g =: Starres Schiebeschild (hier nicht drehbar; f = g möglich)
- h =: Fahrbahn
- i =: Fahrtrichtung und Transportrichtung des Dunges
- k =: bauseitige Führung; hier seitliche Führungskanten
- l =: Stromzuführung über ein nachgeführtes Elektrokabel
- m =: Liegeboxen, Freßplatte oder Übergang im Rinder-Liegeboxenlaufstall
- n =: durchfahrbare Tierabtrennung

## Patentansprüche

1. Landwirtschaftlicher Tierlaufstall mit freilaufenden Tieren und einem selbstfahrenden Dungräumgerät mit einem mit Rädern(b) versehenen Rahmen (a), der entweder von einem auf dem Rahmen (a) befestigten Elektro-Getriebemotor (d)
- mit Kraftkopplung einzelner oder aller Räder (b) oder
- über eine auf dem Rahmen (a) montierte schmale Seil-/Kettenwinde
oder durch Ankopplung des Rahmens (a) an einen
-separaten schmalen Elektro-Getriebemotor mit eigenen Fahrbahnrädern angetrieben ist und den mit zumindest einem am Rahmen (a) jeweils quer zur Fahrtrichtung (i) befestigten starren oder beweglichen Schiebeschild (f,g) den auf ebenen, geschlossenen oder perforierten Tierlauffläche (h) liegenden Dung in Fahrtrichtung (i) vollständig nach außerhalb des Tierbereiches befördert oder bei entsprechend beweglicher Anbringung der Schiebeschilde (f,g) den Dung überfährt, wobei der Rahmen (a) durch zum Tierhaltungssystem passende Zwangsführungen eindeutig auf Position gehalten ist,
dadurch gekennzeichnet,
daß der Rahmen (a) zusammen mit dem zumindest einen Schiebeschild (f,g) von den Tieren übersteigbar und flach ausgeführt und daß der Elektro-Getriebemotor, bezogen auf die Gesamtbreite des Rahmens (a), schmal und von den Tieren, in Fahrtrichtung (i) gesehen, ein- oder beidseitig umgehbar ist.

2. Landwirtschaftlicher Tierlaufstall nach Anspruch 1,
dadurch gekennzeichnet,
daß die Stromzuführung (l) zum Elektromotor (d) über ein nachgeführtes Elektrokabel, über die Abtastung einer Stromschiene oder bei einem Akkumulator-Elektromotor über Ladestationen realisiert ist.

3. Landwirtschaftlicher Tierlaufstall nach einem der Ansprüche 1 oder 2,
dadurch gekennzeichnet,
daß Abmessung, Gewicht und Fahrbewegung des Dungräumgerätes eine unbeaufsichtigte, für die Tiere verletzungsfreie, nicht störende Durchfahrt durch den Tierbereich (h) ermöglicht, was durch eine hohe Standfestigkeit, ein sicheres Gleiten an der bauseitigen Zwangsführung (k,m) und durch eine dem Tierschritt angepaßte Fahrgeschwindigkeit erreicht ist.

4. Landwirtschaftlicher Tierlaufstall nach einem oder mehreren der Ansprüche 1 bis 3,
dadurch gekennzeichnet,
daß der Elektroantrieb (d) direkt oder über die Räder (b) des Rahmens (a) aktive Reinigungselemente antreibt und/oder steuert.

## Claims

1. Agricultural animal pen with free-moving animals and self-clearing dung device with a frame (a) fitted with wheels (b) which is driven either by an electric drive motor (d) secured to the frame (a):
- with a power drive for individual or all wheels (b) or
- a narrow cable/chain winch mounted on the frame (a) or by coupling the frame (a) to
- a separate, narrow electrical drive motor with its own running wheels
and with at least one rigid or movable pusher blade (f, g) secured to the frame (a) transverse to the direction of travel (i) in each case, which removes the dung lying on the flat, closed or perforated animal walkway (a) completely clear of the animal area or which drives over the dung by a suitable movable arrangement of the pusher blade (f,g), whereby the frame (a) is held clearly in position by positive guides suitable for the animal restraint system, characterised in that:
the frame (a) together with at least one pusher blade, (f, g) can be climbed over by the animals and is of flat design and in that the electrical drive motor is narrow relative to the total width of the frame (a) and can be circumvented on one or both sides by the animals, viewed in the direction of travel (1).

2. Agricultural animal pen in accordance with Claim 1, characterised in that:
the power supply (1) to the electric motor (d) is via a trailing electric cable, by pickup from a power rail or from a charging station where a battery-powered electric motor is used.

3. Agriculture animal pen in accordance Claims 1 or 2, characterised in that:
the dimensions, weight and motion of the dung clearing device enables an unsupervised, non-disturbing passage through the animal area (h) without injury to the animals, which is achieved by a high stability, safe sliding on the guides on the building (k, m) and by a rate of travel which is matched to the pace of the animals.

4. Agricultural animal pen in accordance with Claims 1 to 3 characterised in that:
the electric drive (d) either directly or via the wheels (b) of the frame (a) drives and/or controls active cleaning elements.

## Revendications

1. Installation agricole de stabulation pour animaux en liberté équipée d'un appareil automoteur de ramassage du fumier doté d'un cadre (a) muni de roues (b), installation entraînée soit par l'intermédiaire d'un moteur électrique d'entraînement (d) fixé sur le cadre (a)
- avec couplage de quelques-unes ou de toutes les roues (b), ou
- avec un treuil à câble ou à chaîne étroit monté sur le cadre (a)
ou par couplage du cadre (a) avec un
- moteur d'entraînement électrique étroit séparé évoluant sur des rails propres.
Cette installation transporte le fumier situé sur la surface plane, pleine ou perforée (h) d'évolution des animaux dans le sens de la marche (i) et le pousse totalement hors de portée des animaux, et cela au moins au moyen d'un bouclier (f,g) mobile ou rigide fixé au cadre (a) et perpendiculairement au sens de la marche (i) ou peut aussi, avec un montage adéquat du bouclier mobile (f,g), passer au-dessus du fumier et dans ce cas, le cadre (a) est maintenu en position au moyen de guides adaptés au système de rétention des animaux caractérisée en ce que
le cadre (a) avec au minimum un bouclier poussoir (f,g) d'une exécution plate et franchissable par les animaux, et en ce que le moteur d'entraînement électrique est étroit par rapport à la largeur globale du cadre (a) et peut être contourné par les animaux d'un côté ou des deux côtés si l'on regarde dans le sens de la marche (i).

2. Installation agricole de stabulation selon la revendication 1, caractérisée en ce que l'alimentation électrique (l) vers le moteur électrique (d) s'effectue via un câble électrique qui la suit, ou par un rail d'alimentation et un capteur, ou encore au moyen d'un moteur électrique à accumulation doté de stations de chargement.

3. Installation agricole de stabulation selon la revendication 1 ou 2, caractérisée en ce que les dimensions, le poids, et les évolutions de l'appareil d'évacuation du fumier rendent possible un passage à travers la zone réservée aux animaux (h), passage qui ne nécessite aucune surveillance, ne présente pour les animaux aucun danger de blesssure, et ne les perturbe pas, ce qui est obtenu grâce à une grande résistance, un glissement sûr sur les guides fixés à la maçonnerie (k,m) et par une vitesse d'évolution adaptée au pas des animaux.

4. Installation agricole de stabulation selon une ou plusieurs des revendications de 1 à 3, caractérisée en ce que l'entraînement électrique (d) actionne et/ou pilote soit directement soit par l'intermédiaire des roues (b) du cadre (a) des éléments actifs de nettoyage.
